# EUROPEAN PATENT APPLICATION

(11) **EP 3 741 931 A1**
(43) Date of publication of application: **25.11.2020**
(21) Application number: 19175325.0
(22) Date of filing: 20.05.2019
(51) Int. Cl.: E04H 12/02, B29C 70/32, B32B 1/00, B32B 1/08, B32B 5/26, B32B 5/28

(54) **POST AND METHOD OF PROVIDING A POST**

(71) Applicant: ABB Power Grids Switzerland AG, 5400 Baden (CH)
(72) Inventor: JOHANSSON, Anders, 941 42 Piteå (SE); SVANBERG, Magnus, 945 91 Norrfjärden (SE); JOHANSSON, Andre, 943 33 Öjebyn (SE)
(74) Representative: Valea AB

(57) **Abstract**

A method of providing a post (20), the method comprising providing an inner member (14); and providing an outer tubular layer (16) of polymer or plastic around the inner member (14), the outer tubular layer (16) comprising an outer surface (22) having a surface roughness Ra of at least 3 µm.

## Description

### Technical Field

The present disclosure generally relates to posts. In particular, a method of providing a post and a post, are provided.

### Background

Composite utility poles available on the market today often have a smooth and slippery outer surface of an outer polymer layer. Conventional climbing equipment, e.g. for climbing wooden utility poles, therefore cannot be used to climb such composite utility poles. Instead, specialized climbing equipment is needed. Climbing of utility poles is often required during installation and maintenance.

EP 1019583 B1 discloses a post, which is especially a hollow, tube-like piece and which is particularly intended for use as posts for traffic lights, street lights, signposts or similar, and which is formed of two layers. The inner layer is of fiber-reinforced thermoset plastic and the outer layer is of polyolefin plastic.

### Summary

One object of the present disclosure, is to provide a method of providing a post, which method is simple, reliable and/or cost efficient.

A further object of the present disclosure is to provide a method of providing a post, which method enables a high grade of automation.

A still further object of the present disclosure is to provide a method of providing a post, which method can be performed with relatively simple equipment.

A still further object of the present disclosure is to provide a method of providing a post, which method solves several or all of the foregoing objects in combination.

A still further object of the present disclosure is to provide a post comprising an outer tubular layer of polymer or plastic, which post is easy to climb for an operator.

A still further object of the present disclosure is to provide a post comprising an outer tubular layer of polymer or plastic, which post can be strongly secured in the ground.

A still further object of the present disclosure is to provide a post comprising an outer tubular layer of polymer or plastic, which post is light and/or durable.

A still further object of the present disclosure is to provide a post comprising an outer tubular layer of polymer or plastic, which post solves one, several or all of the foregoing objects.

According to one aspect, there is provided a method of providing a post, the method comprising providing an inner member; and providing an outer tubular layer of polymer or plastic around the inner member, the outer tubular layer comprising an outer surface having a surface roughness Ra of at least 3 µm, such as at least 4 µm.

The surface roughness Ra of at least 3 µm increases the friction of the outer surface. Thereby, commercially available equipment and accessories developed for climbing wood poles can be utilized in the same way with the post according to the present disclosure comprising a polymer or plastic outer tubular layer. Examples of such equipment are safety slings and pole climbing shoes. Thus, the post according to the present disclosure can replace wood poles without having to invest in new equipment for climbing the post.

The outer surface of the outer tubular layer further enables the post to be strongly secured to the ground since the surface roughness prevents the post from being withdrawn from the ground and resists rotational torques about a longitudinal axis of the post. Rotational torques may for example occur in the post during installation of overhead power lines.

As used herein, the surface roughness Ra of the outer surface is the arithmetic mean deviation of the profile of outer surface. The surface roughness Ra of the outer surface may for example be 3 µm to 50 µm, such as 5 µm to 30 µm, such as 10 µm.

The inner member may be made of a structural composite material. In this case, the post may be referred to as a composite post. The inner member may be hollow, e.g. constituted by a tube. In case the inner member is a tube, the tube may have a substantially constant, or constant, thickness. Alternatively, or in addition, the tubular inner member may have a constant or varying (e.g. inner and/or outer) diameter. Thus, the tubular inner member may be straight or may taper conically. In case inner member is a tube, the inner member may constitute an inner tubular layer.

The provision of the outer tubular layer may comprise forming the outer tubular layer around the inner member. Glue may optionally be provided between the outer tubular layer and the inner member. The outer tubular layer may for example be made of thermoplastic, polyethylene or polyolefin plastic. The outer surface forms the outermost surface of the post.

The post may be a hollow tube, made up of the inner member and the outer tubular layer. The inner member and the outer tubular layer may have substantially the same length, or the same length, along a longitudinal axis of the post.

The method of providing a post may be a method of producing a post. The post provided by the method may be a utility pole.

The post may for example be used to support overhead power lines, traffic lights, street lights, and/or signposts. Throughout the present disclosure, the post may be hollow. The inner member may form a core of the post.

The method may comprise modifying the surface roughness of the outer surface to the surface roughness Ra of at least 3 µm while the outer tubular layer is provided around the inner member.

The method may comprise modifying the surface roughness of the outer surface to the surface roughness Ra of at least 3 µm by wrapping a sheet onto the outer surface prior to consolidation of the outer tubular layer, and removing the sheet from the outer surface after consolidation of the outer tubular layer. The sheet may comprise substantially the same, or the same, surface roughness as the surface roughness formed in the outer surface. When brought into contact with the unconsolidated outer tubular layer, the sheet imprints its surface structure onto the outer surface of the outer tubular layer during consolidation. When the sheet is removed from the outer tubular layer after consolidation of the outer tubular layer, the imprinted rough outer surface, having a surface roughness Ra of at least 3 µm, is exposed.

The sheet may be a peel ply sheet or peel ply fabric. Alternatively, or in addition, the sheet may be wrapped substantially helically, or helically, onto and around the outer surface.

As an alternative, the method may comprise modifying the surface roughness of the outer surface to the surface roughness Ra of at least 3 µm by machining, knurling and/or blasting of the outer surface.

The provision of the inner member may comprise winding the inner member by means of filament winding. Alternatively, or in addition, the provision of the outer tubular layer may comprise winding the outer tubular layer around the inner member. In case each of the inner member and the outer tubular layer are wound, a single machine can be used for the winding. Also the sheet as described herein may be wound around the outer tubular layer by means of the same machine.

The inner member may be a tubular layer. Alternatively, or in addition, the inner member may be made of fiber-reinforced polymer or fiber-reinforced plastic. According to one example, the inner member is a structural composite of glass fiber-reinforced epoxy. According to a further example, the inner member is made of fiber-reinforced thermoset plastic.

According to a further aspect aspect, there is provided a post, the post comprising an inner member; and an outer tubular layer of polymer or plastic provided around the inner member; wherein the outer tubular layer comprises an outer surface having a surface roughness Ra of at least 3 µm. The outer surface may form the outermost surface of the post.

The inner member may be a tubular layer. The outer tubular layer may form a protective layer around the inner member, e.g. protection against impacts. Alternatively, or in addition, the inner member may comprise fiber-reinforced polymer or fiber-reinforced plastic.

The post may be a utility pole, e.g. for supporting overhead power lines.

### Brief Description of the Drawings

Further details, advantages and aspects of the present disclosure will become apparent from the following embodiments taken in conjunction with the drawings, wherein:
- Fig. 1:: schematically represents a side view of production of an inner member of a post;
- Fig. 2:: schematically represents a side view of the produced inner member;
- Fig. 3:: schematically represents a side view of production of an outer tubular layer of the post;
- Fig. 4:: schematically represents a side view of a sheet wrapped around the outer tubular layer;
- Fig. 5:: schematically represents a side view of a post after removal of the sheet from the outer tubular layer;
- Fig. 6:: schematically represents an enlarged view of section A in Fig. 5;
- Fig. 7:: schematically represents a perspective view of the post; and
- Fig. 8:: schematically represents two posts supporting overhead power lines.

### Detailed Description

In the following, a method of providing a post and a post, will be described. The same reference numerals will be used to denote the same or similar structural features.

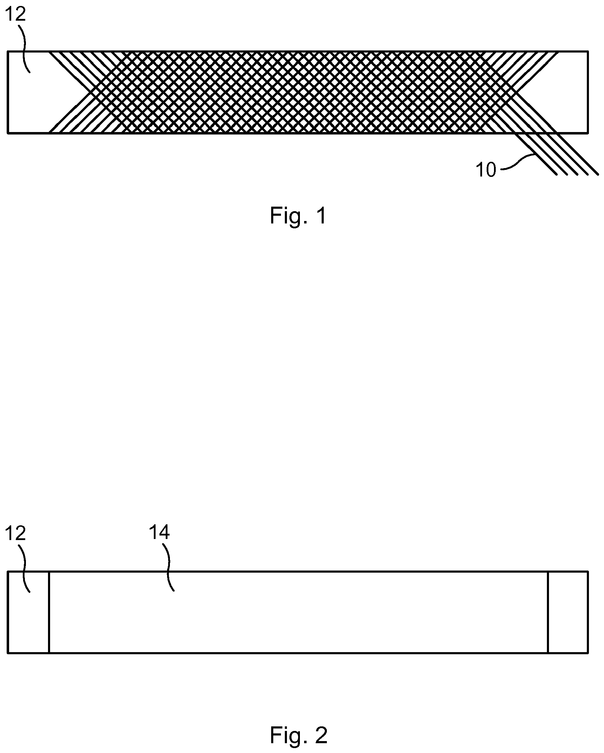

Fig. 1 schematically represents a side view of production of an inner member of a post. The inner member is produced by means of conventional filament winding. A plurality of wet filaments 10 are wound around a mandrel 12. As shown in Fig. 1, the filaments 10 are wound helically in several layers. In this example, the filaments 10 are of a glass fiber-reinforced thermosetting polymer. Thus, the post provided by the method is a composite post.

Fig. 2 schematically represents a side view of the produced inner member 14. The inner member 14 is formed as a tube comprising a plurality of layers of glass fiber-reinforced thermosetting polymer. Furthermore, the inner member 14 in Fig. 2 is tubular with a constant thickness and a constant inner diameter. However, the thickness does not have to be constant.

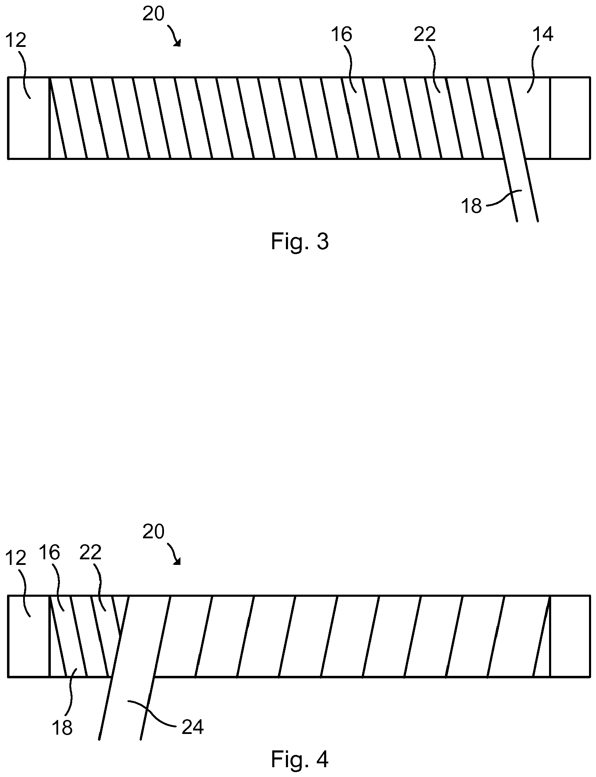

Fig. 3 schematically represents a side view of production of an outer tubular layer 16 of the post. In this example, the outer tubular layer 16 is formed around the inner member 14 by winding a thermoplastic tape 18 onto the inner member 14 to form the post 20. In this example, the thermoplastic tape 18 is made of polyethylene. The thermoplastic tape 18 may be pretreated with corona, plasma, etching or open flame treatment. Glue may optionally be provided between the inner member 14 and the outer tubular layer 16. The winding of the thermoplastic tape 18 is continued until a desired thickness of the outer tubular layer 16 has been obtained. Fig. 3 further shows an outer surface 22 of the outer tubular layer 16. The thermoplastic tape 18 and the filaments 10 are wound by the same machine (not shown).

Fig. 4 schematically represents a side view of a sheet 24 wrapped around the outer tubular layer 16 in a process of modifying a surface roughness of the outer surface 22 of the outer tubular layer 16. In this example, the sheet 24 is a thermally shrinking peel ply sheet wrapped helically around the outer tubular layer 16. As the sheet 24 is wound around the outer tubular layer 16, air is forced out of the outer tubular layer 16. The sheet 24 has a certain roughness that will be imprinted in the outer surface 22 of the outer tubular layer 16.

The sheet 24 is wrapped around the outer tubular layer 16 before the outer tubular layer 16 has consolidated. As the sheet 24 is pressed onto the outer surface 22, the surface texture of the sheet 24 is printed into the outer surface 22 during consolidation of the outer tubular layer 16. The sheet 24 is wound by the same machine (not shown) as having wound the thermoplastic tape 18 forming the outer tubular layer 16 and the filaments 10 forming the inner member 14.

The outer tubular layer 16 with the wrapped sheet 24 is then cured. By keeping the sheet 24 wrapped around the outer tubular layer 16, it can be ensured that the thickness of the outer tubular layer 16 remains static around circumference of the inner member 14 during consolidation.

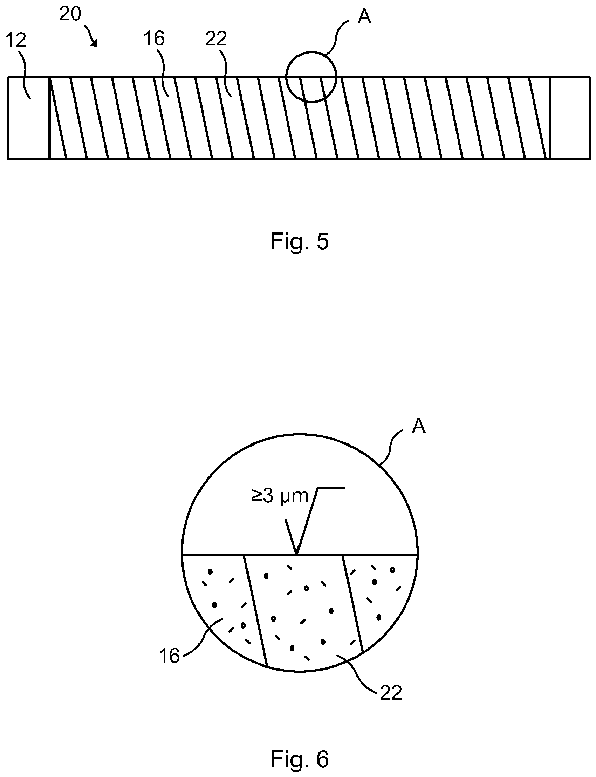

Fig. 5 schematically represents a side view of the post 20 after removal of the sheet 24 from the outer tubular layer 16. Fig. 6 schematically represents an enlarged view of section A in Fig. 5. With collective reference to Figs. 5 and 6, when the sheet 24 is removed after consolidation of the outer tubular layer 16, a coarse texture is exposed on the outer surface 22 of the outer tubular layer 16. In this way, the outer surface 22 of the outer tubular layer 16 is provided with a surface roughness Ra of at least 3 µm, such as 10 µm, expressed as the arithmetic mean deviation of the profile of the outer surface 22. Due to this surface roughness, an increased friction is provided on the outer surface 22. The surface roughness of the outer surface 22 of the outer tubular layer 16 has thus been modified while the outer tubular layer 16 was provided around the inner member 14.

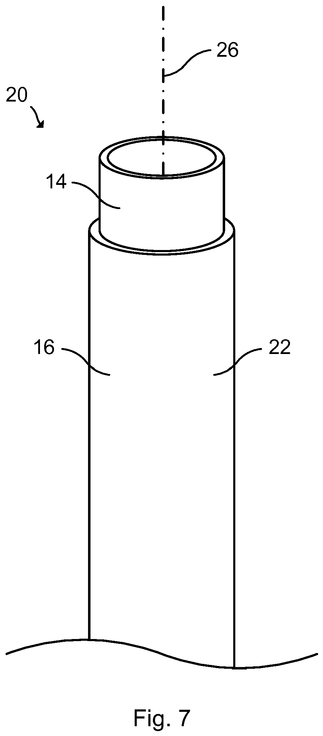

Fig. 7 schematically represents a perspective view of the manufactured post 20. The post 20 in this example is a utility pole. The post 20 is made up of the inner member 14 and the outer tubular layer 16 provided around the inner member 14. The inner member 14 and the outer tubular layer 16 have the same length along a longitudinal axis 26 of the post 20, although the inner member 14 is illustrated as protruding from the outer tubular layer 16.

As shown in Fig. 7, the outer surface 22 forms the outermost surface of the post 20. The outer tubular layer 16 forms a protective layer around the inner member 14.

In this example, the thickness of the inner member 14 is larger than the thickness of the outer tubular layer 16. However, the respective thickness of the inner member 14 and the outer tubular layer 16 may be varied.

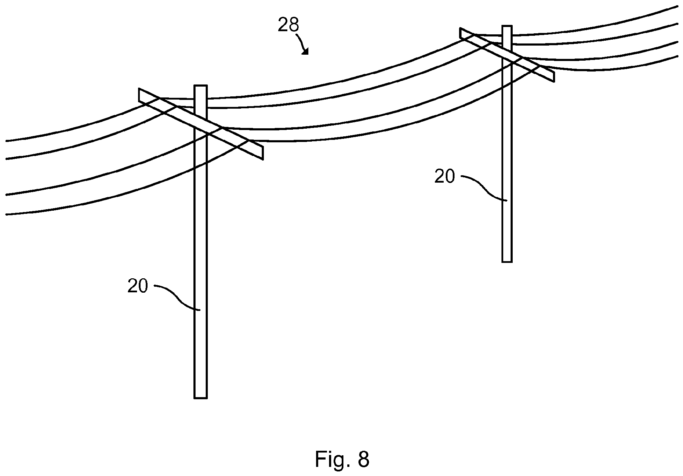

Fig. 8 schematically represents two posts 20 supporting overhead power lines 28. The outer surface 22 of the outer tubular layer 16, having a surface roughness Ra of at least 3 µm, provides a rough surface texture that can be utilized for climbing the post 20, e.g. by means of a generic safety sling, to access the power lines 28. Thereby, the post 20 according to the present disclosure can be climbed in the same way as a wood post. The outer surface 22 of the outer tubular layer 16 further improves the grip of the post 20 in the ground. For example, the resistance against rotational torques acting around the longitudinal axis 26 of the post 20, is increased.

While the present disclosure has been described with reference to exemplary embodiments, it will be appreciated that the present invention is not limited to what has been described above. For example, it will be appreciated that the dimensions of the parts may be varied as needed. Accordingly, it is intended that the present invention may be limited only by the scope of the claims appended hereto.

## Claims

1. A method of providing a post (20), the method comprising:
- providing an inner member (14); and
- providing an outer tubular layer (16) of polymer or plastic around the inner member (14), the outer tubular layer (16) comprising an outer surface (22) having a surface roughness Ra of at least 3 µm.

2. The method according to claim 1, wherein the method comprises modifying the surface roughness of the outer surface (22) to the surface roughness Ra of at least 3 µm while the outer tubular layer (16) is provided around the inner member (14).

3. The method according to claim 1 or 2, wherein the method comprises modifying the surface roughness of the outer surface (22) to the surface roughness Ra of at least 3 µm by wrapping a sheet (24) onto the outer surface (22) prior to consolidation of the outer tubular layer (16), and removing the sheet (24) from the outer surface (22) after consolidation of the outer tubular layer (16).

4. The method according to claim 3, wherein the sheet (24) is a peel ply sheet (24).

5. The method according to claim 3 or 4, wherein the sheet (24) is wrapped substantially helically onto and around the outer surface (22).

6. The method according to any of the preceding claims, wherein the method comprises modifying the surface roughness of the outer surface (22) to the surface roughness Ra of at least 3 µm by machining, knurling and/or blasting of the outer surface (22).

7. The method according to any of the preceding claims, wherein the provision of the inner member (14) comprises winding the inner member (14) by means of filament winding.

8. The method according to any of the preceding claims, wherein the provision of the outer tubular layer (16) comprises winding the outer tubular layer (16) around the inner member (14).

9. The method according to any of the preceding claims, wherein the inner member (14) is a tubular layer.

10. The method according to any of the preceding claims, wherein the inner member (14) is made of fiber-reinforced polymer or fiber-reinforced plastic.

11. A post (20), the post (20) comprising:
- an inner member (14); and
- an outer tubular layer (16) of polymer or plastic provided around the inner member (14);
wherein the outer tubular layer (16) comprises an outer surface (22) having a surface roughness Ra of at least 3 µm.

12. The post (20) according to claim 11, wherein the inner member (14) is a tubular layer.

13. The post (20) according to claim 11 or 12, wherein the inner member (14) comprises fiber-reinforced polymer or fiber-reinforced plastic.

14. The post (20) according to any of claims 11 to 13, wherein the post (20) is a utility pole.
